# EUROPEAN PATENT SPECIFICATION

(11) **EP 4 075 176 B1**
(45) Date of publication and mention of the grant of the patent: **20.05.2026**
(21) Application number: 21740979.6
(22) Date of filing: 13.01.2021
(51) Int. Cl.: G02B 6/42

(54) **OPTICAL TRANSCEIVER ASSEMBLY AND RELATED PRODUCT**
OPTISCHE SENDER-EMPFÄNGERANORDNUNG UND ZUGEHÖRIGES PRODUKT
ENSEMBLE ÉMETTEUR-RÉCEPTEUR OPTIQUE ET PRODUIT ASSOCIÉ

(30) Priority: 19.01.2020 CN 202010060041
(43) Date of publication of application: 19.10.2022
(73) Proprietor: Huawei Technologies Co., Ltd., Shenzhen, Guangdong 518129 (CN)
(72) Inventor: SUO, Jing, Shenzhen, Guangdong 518129 (CN); SONG, Xiaolu, Shenzhen, Guangdong 518129 (CN); LI, Yanbo, Shenzhen, Guangdong 518129 (CN)
(74) Representative: Isarpatent
(86) International application number: PCT/CN2021/071433
(87) International publication number: WO 2021/143715

(56) References cited:
- WO-A1-2019/222476
- CN-A- 107 342 821
- CN-A- 108 476 065
- CN-A- 109 782 394
- JP-A- S62 150 210
- US-A1- 2016 301 477
- US-A1- 2017 242 206
- US-B1- 7 043 101

## Description

### TECHNICAL FIELD

This application relates to the field of optical component technologies, and in particular, to an optical transceiver sub-assembly, an optical network terminal, an optical line terminal, and an optical communications device.

### BACKGROUND

A bi-directional optical sub-assembly (BOSA) is a sub-assembly commonly used in the field of optical communication, and has functions of optical transmitting and optical receiving. In a current production process, an optical transmitting component and an optical receiving component need to be separately packaged into coaxial modules, and then the two coaxial modules and a spatial filter are assembled together to obtain the BOSA.

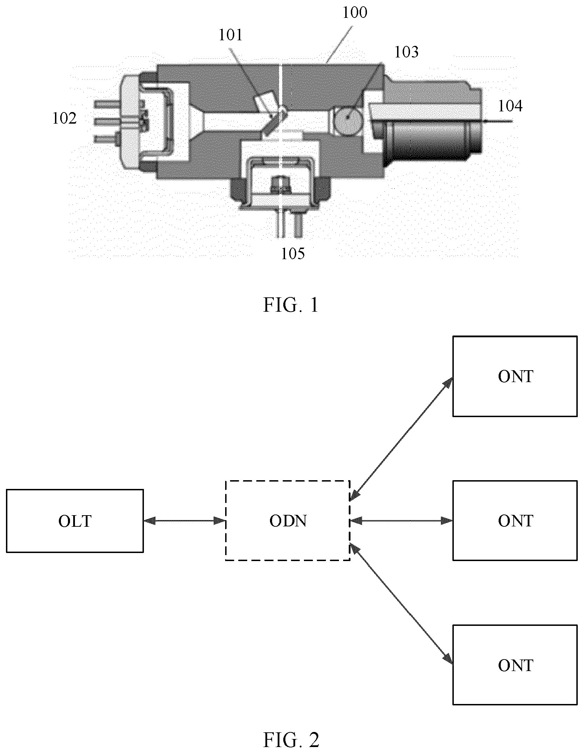

FIG. 1 is a schematic diagram of a packaging structure of a BOSA. In FIG. 1, a spatial filter 101 is disposed between a coaxial module 102 into which an optical transmitting component is packaged and an optical lens 103, one side of the optical lens 103 is the spatial filter 101, and the other side of the optical lens 103 is an optical fiber 104. The spatial filter 101, the coaxial module 102 into which the optical transmitting component is packaged, and a coaxial module 105 into which an optical receiving component is packaged are assembled in a three-directional optical sub-assembly 100 shown in FIG. 1, to form the BOSA having functions of optical receiving and optical transmitting. In a manufacturing manner of the BOSA, a plurality of packaging operations need to be performed, and many packaging materials need to be used. Therefore, process costs and material costs are relatively high.

US 2017/242206 A1 discloses a single-fiber bidirectional optical transceiver module of the same wavelength. CN 109782394 A discloses a single-fiber bidirectional transceiver module comprising an optical transceiver sub-assembly, a polarization splitter and rotator, an optical receiving sub-assembly, an optical fiber, and an optical filter.

### SUMMARY

This application provides an optical transceiver sub-assembly, an optical network terminal, an optical line terminal, and an optical communications device, as defined in the appended set of claims, to reduce production costs of an optical sub-assembly.

According to a first aspect of this application, an optical transceiver sub-assembly is provided. The optical transceiver sub-assembly includes an optical transmitting component, a polarization splitter and rotator, an optical receiving component, an optical fiber configured to transmit and receive a multi-wavelength signal, a beam combiner/splitter, and a wavelength processor configured as a demultiplexer. The optical transmitting component is optically connected to a first port of the beam combiner/splitter. A first optical interface and a second optical interface of the optical receiving component are optically connected to a second port of the beam combiner/splitter and a first port of the wavelength processor respectively. A third port of the beam combiner/splitter, the wavelength processor, and the optical fiber are optically connected to the polarization splitter and rotator separately.

In this application, due to use of an integrated component that may be chip-based, such as the polarization splitter and rotator, an optical wave may be transmitted in a waveguide rather than in a spatial optical path. The optical transceiver sub-assembly does not need to be assembled after elements are packaged in a coaxial manner, so that packaging material costs and process costs are effectively reduced, thereby reducing production costs.

With reference to the first aspect, the polarization splitter and rotator, the beam combiner/splitter, and the wavelength processor are formed into an integrated chip through single tape-out. The optical transmitting component is integrated into the integrated chip, or integrated with the integrated chip in a mounting or hybrid integration manner. The optical receiving component is integrated into the integrated chip, or integrated with the integrated chip in the mounting or hybrid integration manner. The optical fiber is integrated with the integrated chip in a mounting manner. This integration implementation improves integration of the entire optical transceiver sub-assembly and makes miniaturization of the optical transceiver sub-assembly possible.

With reference to the first aspect, in a possible implementation, the beam combiner/splitter is covered with a magnetic material, and the magnetic material is configured to isolate an optical wave that is backward transmitted from the beam combiner/splitter to the optical transmitting component.

With reference to the possible implementation of the first aspect, the magnetic material is specifically configured to isolate, under an action of an applied magnetic field, the optical wave that is backward transmitted from the beam combiner/splitter to the optical transmitting component.

In the foregoing possible implementation, the beam combiner/splitter is covered with the magnetic material, so that the beam combiner/splitter further has an isolator function. No additional isolator is added, and the isolation function may be implemented based on the existing beam combiner/splitter in the optical transceiver sub-assembly. Therefore, high integration of the optical transceiver sub-assembly is ensured.

With reference to the first aspect, in a possible implementation, the optical transceiver sub-assembly further includes an on-chip isolator that is located between the optical transmitting component and the first port of the beam combiner/splitter, and that is configured to isolate an optical wave that is backward transmitted from the beam combiner/splitter to the optical transmitting component.

With reference to a possible implementation of the first aspect, the optical transceiver sub-assembly may further include a trans-impedance amplifier, where the trans-impedance amplifier is electrically connected to an electrical interface of the optical receiving component.

With reference to a possible implementation of the first aspect, the beam combiner/splitter and the wavelength processor are separately any one of the following: a Mach-Zehnder interferometer, a microring resonator, a directional coupler, or a Fabry-Perot cavity filter.

With reference to a possible implementation of the first aspect, the optical transceiver sub-assembly may further include a spot size converter located between the polarization splitter and rotator and the optical fiber. Specifically, the optical fiber is optically connected to the polarization splitter and rotator by using the spot size converter.

With reference to a possible implementation of the first aspect, the optical transceiver sub-assembly may further include a shielding can that is located outside the optical transmitting component, the polarization splitter and rotator, the optical receiving component, the beam combiner/splitter, and the wavelength processor, and that is configured to shield a radio frequency signal outside the shielding can. The shielding can of the optical transceiver sub-assembly shields an external radio frequency signal, and therefore does not interfere with implementation of optical communication inside the optical transceiver sub-assembly, thereby ensuring quality of optical communication.

According to a second aspect of this application, an optical network terminal is provided. The optical network terminal includes the optical transceiver sub-assembly provided in the first aspect, and further includes an electrical chip. The optical transceiver sub-assembly is electrically connected to the electrical chip.

According to a third aspect of this application, an optical line terminal is provided. The optical line terminal includes the optical transceiver sub-assembly provided in the first aspect, and further includes an electrical chip. The optical transceiver sub-assembly is electrically connected to the electrical chip.

According to a fourth aspect of this application, an optical communications device is provided. The optical communications device includes the optical transceiver sub-assembly provided in the first aspect, and the optical transceiver sub-assembly further includes a driver and a limiting amplifier.

In the devices provided in the second aspect, the third aspect, and the fourth aspect, the optical transceiver sub-assembly provided in the first aspect is used. Therefore, based on a low-cost advantage of the optical transceiver sub-assembly, correspondingly, production costs of the devices provided in the second aspect, the third aspect, and the fourth aspect are also reduced. This is favorable for popularization and application of the devices.

It may be learned from the foregoing technical solutions that embodiments of this application have at least the following advantages: The integrated component such as the polarization splitter and rotator is used in the optical transceiver sub-assembly provided in this application, and regardless of whether light is received or transmitted, an optical wave is transmitted by using the chip-based integrated component. Therefore, compared with a BOSA that transmits an optical wave by using a spatial optical path, the optical transceiver sub-assembly does not need to be assembled after elements are packaged in a coaxial manner, so that material costs and process costs required for packaging are reduced, thereby reducing production costs.

### BRIEF DESCRIPTION OF DRAWINGS

FIG. 1 is a schematic diagram of a packaging structure of a BOSA;
FIG. 2 is a schematic diagram of a scenario of an optical access network;
FIG. 3 is a schematic diagram of a structure of an optical transceiver sub-assembly 300 according to an embodiment of this application;
FIG. 4 is a schematic diagram of forward and backward transmission spectral lines of a beam combiner/splitter covered with a magnetic material;
FIG. 5 is a schematic diagram of a structure of an optical transceiver sub-assembly 700 with an isolation function according to an embodiment of this application;
FIG. 6 is a schematic diagram of a structure of an optical transceiver sub-assembly 800 according to an embodiment of this application;
FIG. 7 is a schematic diagram of a structure of an optical transceiver sub-assembly 900 according to an embodiment of this application;
FIG. 8 is a diagram of a packaging structure of an optical transceiver sub-assembly 1000 according to an embodiment of this application;
FIG. 9 is a diagram of an application scenario of an optical network terminal and an optical line terminal according to an embodiment; and
FIG. 10 is a flowchart of a method for producing an optical transceiver sub-assembly that can isolate light according to an embodiment of this application.

### DESCRIPTION OF EMBODIMENTS

As mentioned above, in a conventional BOSA production manner, an optical transmitting component and an optical receiving component need to be separately packaged into coaxial modules, and then the coaxial modules are packaged together. During production, a plurality of packaging operations need to be performed, and many packaging materials need to be used. In this case, material costs and process costs are relatively high. High production costs are unfavorable for popularization and application of a BOSA in the field of optical communication.

Based on the foregoing problem, embodiments of this application provide an optical transceiver sub-assembly, an optical transmitting and receiving method, and a related product. The optical transceiver sub-assembly uses an integrated component, which eliminates a strict requirement of a spatial optical path on coaxial packaging of the sub-assembly, thereby simplifying packaging and reducing production costs. In practical application, the optical transceiver sub-assembly may be applied to a plurality of scenarios in the field of optical communication.

In an example, in a scenario of an optical access network, the optical transceiver sub-assembly may be applied to an optical network terminal (ONT) or an optical line terminal (OLT). The optical network terminal ONT is also referred to as an optical network unit (ONU), and is located on a user side (for example, a roadside, a building, or an office or a residence of a user). The ONT is a terminal device connected to an optical fiber, provides a service interface for the user, has functions of optical-to-electrical conversion and electrical-to-optical conversion, and can receive broadcast data sent by the OLT. The OLT is located on a network side (for example, a central equipment room of an operator), and is configured to provide network centralization and access. The OLT can perform optical-to-electrical conversion, electrical-to-optical conversion, bandwidth allocation, and channel connection control, and has functions of real-time monitoring, management, and maintenance. In the scenario of the optical access network, the ONT and the OLT may be connected by using an optical distribution network (ODN).

FIG. 2 is a schematic diagram of a scenario of an optical access network. In the scenario shown in FIG. 2, an OLT and each ONT may be optically connected to an ODN separately by using an optical fiber. The OLT and the ONT implement optical communication by using the ODN as an intermediate medium. For the optical access network, both the OLT and the ONT are generally required to have functions of optical receiving and optical transmitting. The optical transceiver sub-assembly provided in the embodiments of this application can provide a bi-directional optical transmitting and receiving function. Therefore, in the scenario shown in FIG. 2, both the OLT and the ONT may include the optical transceiver sub-assembly provided in the embodiments of this application, to perform bi-directional transmitting and receiving of optical waves.

In another example, in an optical communication scenario other than an optical access network, if an optical communications device needs to bi-directionally transmit and receive optical waves of different wavelengths by using a single optical fiber, for example, in a wireless fronthaul scenario or a campus interconnection scenario, the optical transceiver sub-assembly provided in the embodiments of this application may be applied to the optical communications device in the scenario.

To make a person skilled in the art better understand technical solutions provided in the embodiments of this application, the following first describes an implementation of the optical transceiver sub-assembly.

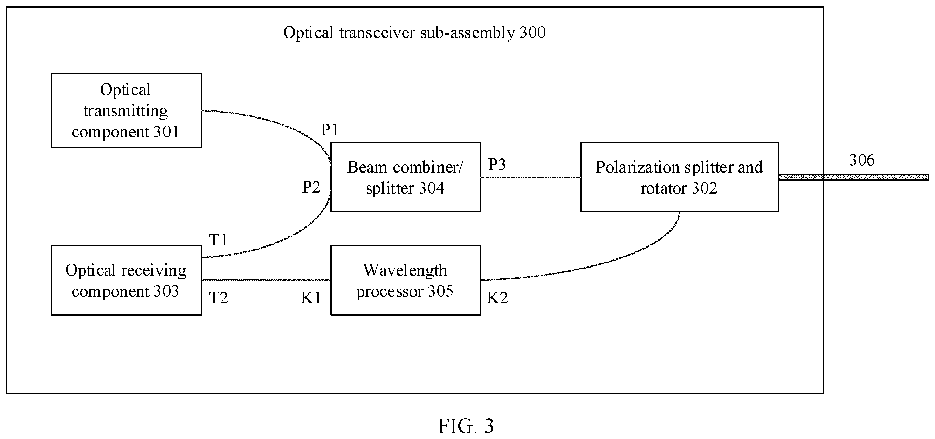

FIG. 3 is a schematic diagram of a structure of an optical transceiver sub-assembly 300 according to an embodiment of this application. As shown in FIG. 3, the optical transceiver sub-assembly 300 includes an optical transmitting component 301, a polarization splitter and rotator 302, an optical receiving component 303, a beam combiner/splitter 304, a wavelength processor 305, and an optical fiber 306.

In this embodiment, the optical transmitting component 301 may be any light source in the field of optical communication, for example, a laser diode (LD). Specifically, the LD may be a directly modulated laser (DML) or an electro-absorption modulated laser (EML). In different scenarios, requirements on a wavelength, power, and the like of the optical transmitting component 301 may be different. Therefore, parameters such as a specific type, a model, a wavelength, and power of the optical transmitting component 301 are not limited in this application.

The polarization splitter and rotator (PSR) 302 is fixedly disposed in the optical transceiver sub-assembly 300. When the optical transceiver sub-assembly 300 sends an optical wave to the outside, the PSR 302 is used as a light-transmission component, and directly transmits the optical wave. When the optical transceiver sub-assembly 300 receives an optical wave transmitted from the outside, the PSR 302 can change a polarization state of the optical wave, and can transmit incident beams by using two optical paths.

The optical receiving component 303 may be any component for detecting an optical signal in the field of optical communication, for example, an avalanche photodiode (APD) or a PIN photodiode. The optical receiving component 303 can convert a received optical signal into an electrical signal, that is, implement optical-to-electrical conversion. Parameters such as a specific type, a model, responsivity, and a detection wavelength of the optical receiving component 303 are not limited in this application.

In this embodiment, the optical receiving component 303 is a dual-channel detector, for example, a dual-channel APD. The optical receiving component 303 is specifically configured to receive two optical waves. The optical receiving component 303 includes a first optical interface T1 and a second optical interface T2. The first optical interface T1 is configured to receive one optical wave, and the second optical interface T2 is configured to receive another optical wave.

When the optical transceiver sub-assembly 300 sends an optical wave to the outside, the beam combiner/splitter 304 is used as a beam combiner (also referred to as a multiplexer, Multiplexer), to combine received optical waves into an optical wave and then transmit the optical wave. When the optical transceiver sub-assembly 300 receives an optical wave transmitted from the outside, the beam combiner/splitter 304 is used as a beam splitter (also referred to as a demultiplexer, Demultiplexer), to split a received optical wave into optical waves and then transmit the optical waves. In this embodiment, the beam combiner/splitter 304 is a component that has both a beam combining function and a beam splitting function, for example, a Mach-Zehnder interferometer, a microring resonator, a directional coupler, or a Fabry-Perot cavity filter.

In this embodiment, the beam combiner/splitter 304 of the optical transceiver sub-assembly 300 includes at least three ports, which are respectively a first port P1, a second port P2, and a third port P3. Light enters from the first port P1, and then exits from the third port P3. Alternatively, light enters from the third port P3 and then exits from the second port P2.

The wavelength processor 305 is configured to split a received optical wave into optical waves and then transmit the optical waves. The wavelength processor 305 is used as a beam splitter. It may be understood that the wavelength processor 305 needs to have the beam splitting function, and whether the wavelength processor 305 has the beam combining function is not limited. That is, the wavelength processor 305 may be a beam splitter that has the beam splitting function, or may be a beam combiner/splitter that has both the beam splitting function and the beam combining function. A specific example is the same as the example of the beam combiner/splitter 304, and is not described herein.

In this embodiment, the optical fiber 306 may be specifically a single-core optical fiber, that is, one optical fiber 306 is used to transmit and receive optical waves.

The following describes a connection relationship between elements in the optical transceiver sub-assembly 300, and with reference to the connection relationship between the elements, separately describes implementations of transmitting light and receiving light by the optical transceiver sub-assembly 300.

As shown in FIG. 3, the optical transmitting component 301 is optically connected to a first port P1 of the beam combiner/splitter 304. A first optical interface T1 and a second optical interface T2 of the optical receiving component 303 are optically connected to a second port P2 of the beam combiner/splitter 304 and a first port K1 of the wavelength processor 305 respectively. A third port P3 of the beam combiner/splitter 304, the wavelength processor 305, and the optical fiber 306 are optically connected to the polarization splitter and rotator 302 separately.

In this embodiment of this application, the optical transceiver sub-assembly 300 may implement both functions of optical transmitting and optical receiving.

For the entire optical transceiver sub-assembly 300, if the optical transceiver sub-assembly 300 implements the function of optical transmitting, in the structure shown in FIG. 3, an optical wave is transmitted from the optical transmitting component 301 to the optical fiber 306. In practical application, an optical wave transmitted by the optical transmitting component 301 enters the beam combiner/splitter 304 through the first port P1 of the beam combiner/splitter 304. The beam combiner/splitter 304 combines incident optical waves, and transmits a combined optical wave by using the third port P3 of the beam combiner/splitter 304. Light exits from the third port P3 can enter the optical fiber 306 after being transmitted by using the PSR 302, and then can be output by the optical fiber 306.

For the entire optical transceiver sub-assembly 300, if the optical transceiver sub-assembly 300 implements the function of optical receiving, in the structure shown in FIG. 3, an optical wave is transmitted from the optical fiber 306 to the optical receiving component 303. In practical application, there is random jitter in a polarization state of an optical wave entering the optical transceiver sub-assembly 300 through the optical fiber 306. This brings uncertainty to evaluation of an optical power loss of the optical wave in the optical transceiver sub-assembly 300. That is, it is difficult to evaluate the optical power loss by using a result of detecting the optical wave in the random polarization state by the optical receiving component 303. The optical wave is an electromagnetic wave. In this embodiment, the optical wave in the random polarization state may be divided into a transverse electric wave (TE light) and a transverse magnetic wave (TM light) by using the PSR 302. The TE light and the TM light each have a unified polarization state. A loss of the TE light is less than a loss of the TM light. Therefore, a polarization state of the TM light obtained through division may be further processed by using the PSR 302, to obtain TE light. That is, one optical wave in the random polarization state is divided into two beams of TE light with a consistent polarization state by using the PSR 302.

The polarization state processing eliminates impact of randomness of the polarization state on the evaluation of the optical power loss, and reduces complexity and difficulty of evaluating the optical power loss, so that the evaluated optical power loss is more accurate.

As shown in FIG. 3, a beam of light transmitted from the PSR 302 enters the beam combiner/splitter through the third port P3 of the beam combiner/splitter 304; the beam combiner/splitter 304 splits the optical wave, and transmits a filtered optical wave by using the second port P2 of the beam combiner/splitter 304; and after being transmitted, the optical wave enters the optical receiving component 303 through the first optical interface T1 of the optical receiving component 303. Another beam of light transmitted from the PSR 302 enters the wavelength processor 305 through a second port K2 of the wavelength processor 305; the wavelength processor 305 splits the optical wave, and transmits a filtered optical wave by using the first port K1 of the wavelength processor 305; and after being transmitted, the optical wave enters the optical receiving component 303 through the second optical interface T2 of the optical receiving component 303.

The optical receiving component 303 further includes an electrical interface (not shown in FIG. 3). Light intensity of the two received optical waves is superimposed in the optical receiving component 303, and the optical receiving component 303 performs optical-to-electrical conversion, to finally convert the optical waves into an electrical signal. The electrical signal may be specifically transmitted to the outside of the optical transceiver sub-assembly 300 by using the electrical interface of the optical receiving component 303.

An integrated component such as the polarization splitter and rotator 302 is used in the optical transceiver sub-assembly 300 provided in this application, and regardless of whether light is received or transmitted, an optical wave is transmitted by using the chip-based integrated component. Therefore, compared with a BOSA that transmits an optical wave by using a spatial optical path, the optical transceiver sub-assembly does not need to be assembled after elements are packaged in a coaxial manner, so that material costs and process costs required for packaging are reduced, thereby reducing production costs.

In a possible implementation, in the optical transceiver sub-assembly 300 provided in this embodiment of this application, the polarization splitter and rotator 302, the beam combiner/splitter 304, and the wavelength processor 305 may be formed into an integrated chip in a single tape-out manner. The integrated chip may implement corresponding functions of the PSR 302, the beam combiner/splitter 304, and the wavelength processor 304. The optical transmitting component 301 and the optical receiving component 303 in the optical transceiver sub-assembly 300 may each be integrated into the integrated chip, or may each be integrated with the integrated chip in a mounting or hybrid integration manner. The optical fiber 306 is integrated with the integrated chip in a mounting manner. It may be understood that the optical transceiver sub-assembly 300 includes the following possible implementations:
(1) The polarization splitter and rotator 302, the beam combiner/splitter 304, and the wavelength processor 304 are formed into an integrated chip in the single tape-out manner, and the optical transmitting component 301, the optical receiving component 303, and the optical fiber 306 are each integrated with the integrated chip. The mounting or hybrid integration manner is used for the optical transmitting component 301 and the optical receiving component 303, and the mounting manner is used for the optical fiber 306.
(2) The optical transmitting component 301, the polarization splitter and rotator 302, the beam combiner/splitter 304, and the wavelength processor 304 are formed into an integrated chip in the single tape-out manner, and the optical receiving component 303 and the optical fiber 306 are each integrated with the integrated chip. The mounting or hybrid integration manner is used for the optical receiving component 303, and the mounting manner is used for the optical fiber 306.
(3) The polarization splitter and rotator 302, the optical receiving component 303, the beam combiner/splitter 304, and the wavelength processor 304 are formed into an integrated chip in the single tape-out manner, and the optical transmitting component 301 and the optical fiber 306 are each integrated with the integrated chip. The mounting or hybrid integration manner is used for the optical transmitting component 301, and the mounting manner is used for the optical fiber 306.
(4) The optical transmitting component 301, the polarization splitter and rotator 302, the optical receiving component 303, the beam combiner/splitter 304, and the wavelength processor 304 are formed into an integrated chip in the single tape-out manner, and the optical fiber 306 is integrated with the integrated chip in the mounting manner.

How to implement mounting or hybrid integration of an element to a chip belongs to a relatively mature technology. Therefore, a specific implementation of an integration process is not described in detail herein.

In the optical transceiver sub-assembly, a function of the optical transmitting component is to transmit an optical wave. In this embodiment, a direction of transmitting an optical wave by the optical transmitting component is used as a forward direction, and a direction of transmitting an optical wave from the beam combiner/splitter to the optical transmitting component is used as a backward direction. Because a backward optical wave interferes with operating of the optical transmitting component, an isolator may be disposed in the optical transceiver sub-assembly to isolate the backward optical wave.

Currently, impact of the backward optical wave does not need to be considered for a DML applied to a gigabit-capable passive optical network, but the impact of the backward optical wave needs to be considered in a 10-gigabit-capable passive optical network and a 10-gigabit-capable symmetric passive optical network. The following describes an implementation of an optical transceiver sub-assembly with an isolation function with reference to embodiments and accompanying drawings.

This application provides another embodiment of the optical transceiver sub-assembly. Based on the foregoing embodiment, in this embodiment, the beam combiner/splitter 304 is covered with a magnetic material. A function of the magnetic material is to make a forward transmission spectral line and a backward transmission spectral line of the beam combiner/splitter 304 non-reciprocal, so that the beam combiner/splitter 304 has a function of isolating a backward optical wave.

In practical application, the magnetic material may be a conventional magnetic material. The conventional magnetic material may bring an additional non-reciprocal π-phase transition to the backward optical wave under an action of an applied magnetic field, thereby implementing forward conduction and backward blocking. That is, the beam combiner/splitter 304 covered with the conventional magnetic material can isolate, under the action of the applied magnetic field, an optical wave that is backward transmitted from the beam combiner/splitter 304 to the optical transmitting component 301. For example, the conventional magnetic material may be a yttrium iron garnet (YIG), which is usually doped with some elements, such as cerium (Ce: YIG) or bismuth (Bi: YIG).

In addition, the magnetic material covering the beam combiner/splitter 304 may alternatively be a novel magnetic material. The novel magnetic material may bring an additional non-reciprocal π-phase transition to the backward optical wave without an applied magnetic field, thereby implementing backward blocking. That is, the beam combiner/splitter 304 covered with the novel magnetic material can isolate, without an applied magnetic field, an optical wave that is backward transmitted from the beam combiner/splitter 304 to the optical transmitting component 301. For example, the novel magnetic material may be a locked bismuth-doped yttrium iron garnet.

It may be learned that the beam combiner/splitter 304 in this embodiment not only has functions of beam combining and beam splitting, but also is enabled, by covering the beam combiner/splitter 304 with the magnetic material, to have a function of unidirectionally isolating light, and is equivalent to an isolator.

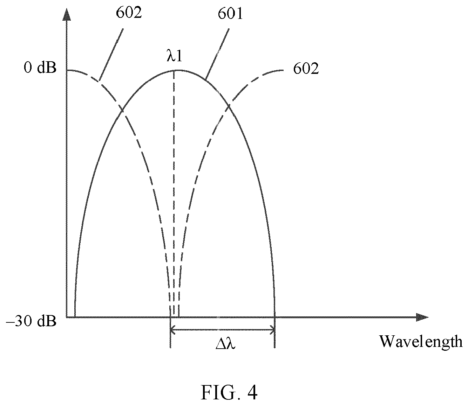

FIG. 4 is a schematic diagram of forward and backward transmission spectral lines of a beam combiner/splitter covered with a magnetic material. In FIG. 4, a horizontal coordinate represents a wavelength in a unit of nanometer (nm), and a vertical coordinate represents transmittance in a unit of dB. A curve 601 is a forward transmission spectral line, and a curve 602 is a backward transmission spectral line. An operating wavelength of the optical transmitting component 301 is λ1. As shown in FIG. 4, the beam combiner/splitter 304 is covered with a magnetic material. Therefore, there is a non-reciprocal difference Δ*λ* between the forward transmission spectral line 601 and the backward transmission spectral line 602, and Δ*λ* ≠ 0, which indicates that the beam combiner/splitter 304 has a characteristic of non-reciprocal transmission.

As shown in FIG. 4, transmittance corresponding to the forward transmission spectral line 601 at λ1 is close to 0 dB, indicating relatively high transmittance for an optical wave transmitted by the optical transmitting component 301, and the transmittance is close to 100%. Transmittance corresponding to the backward transmission spectral line at λ1 is less than -30 dB, indicating relatively low transmittance for an optical wave that is backward transmitted from the beam combiner/splitter 304 to the optical transmitting component 301, and the transmittance is less than 0.1%. It may be learned that λ1 is within a conduction wavelength range of the forward transmission spectral line of the beam combiner/splitter 304 and within a blocking wavelength range of the backward transmission spectral line of the beam combiner/splitter 304. With reference to FIG. 4, it may be learned that, because the transmittance corresponding to the backward transmission spectral line at λ1 is far less than the transmittance corresponding to the forward transmission spectral line at λ1, the beam combiner/splitter 304 can better implement effects of forward conduction and backward isolation.

The magnetic material is selected, and magnetic field strength and electric field strength of light are controlled, so that the non-reciprocal difference between the forward transmission spectral line 601 and the backward transmission spectral line 602 meets a condition shown in FIG. 4. In this way, the beam combiner/splitter 304 implements functions of forward conduction and backward blocking (as shown in FIG. 4), and may be used as an isolator in the optical transceiver sub-assembly to isolate the optical wave that is backward transmitted from the beam combiner/splitter 304 to the optical transmitting component 301, thereby reducing or avoiding interference of a reflected optical wave to operating of the optical transmitting component 301.

In this embodiment, the beam combiner/splitter 304 is directly covered with the magnetic material, so that the beam combiner/splitter 304 has an isolator function. An independent component with the isolation function does not need to be disposed in the optical transceiver sub-assembly, so that an isolator does not need to be mounted, thereby improving overall integration of the optical transceiver sub-assembly.

In practical application, in another optional implementation, the beam combiner/splitter 304 may alternatively not be covered with the magnetic material, but an on-chip isolator is disposed between the optical transmitting component 301 and the beam combiner/splitter 304. The on-chip isolator is configured to isolate a backward optical wave.

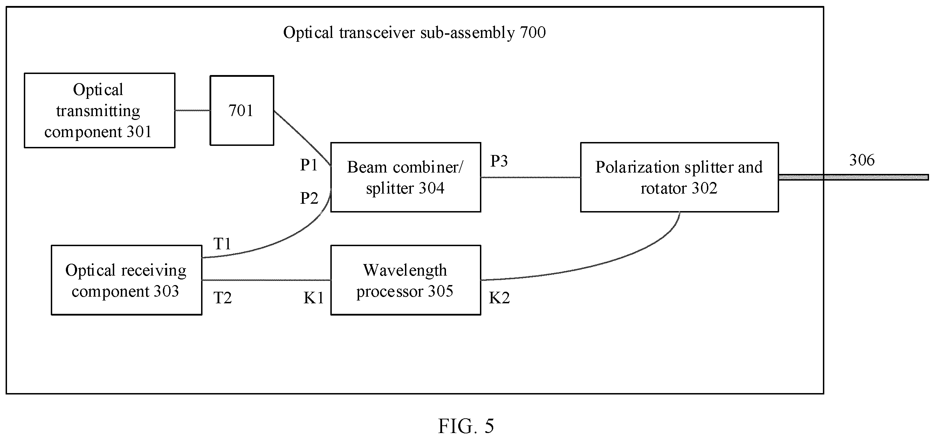

FIG. 5 is a schematic diagram of a structure of an optical transceiver sub-assembly 700 with an isolation function according to an embodiment of this application. As shown in FIG. 5, in the optical transceiver sub-assembly 700, a connection relationship between elements is substantially unchanged compared with the optical transceiver sub-assembly 300 shown in FIG. 3. A difference is that in the optical transceiver sub-assembly 700, the optical transmitting component 301 and the beam combiner/splitter 304 are not optically connected directly, but are optically connected by using an on-chip isolator 701 between the optical transmitting component 301 and the beam combiner/splitter 304. As shown in FIG. 5, one end of the on-chip isolator 701 receives an optical wave transmitted by the optical transmitting component 301. After entering the on-chip isolator 701, the optical wave exits from the other end of the on-chip isolator 701, and then enters the beam combiner/splitter 304 through the first port P1 of the beam combiner/splitter 304.

As an optical component, the on-chip isolator 701 has functions of forward conduction and backward isolation. Therefore, the on-chip isolator 701 can isolate an optical wave that is backward transmitted from the beam combiner/splitter 304 to the optical transmitting component 301.

In a possible implementation, the on-chip isolator 701 may be a beam combiner/splitter covered with a magnetic material, for example, a Mach-Zehnder interferometer, a microring resonator, a directional coupler, or a Fabry-Perot cavity filter covered with a magnetic material. In this embodiment of this application, the on-chip isolator 701 may be integrated with an integrated chip.

In practical application, it is assumed that the optical transceiver sub-assembly includes the integrated chip mentioned in the foregoing embodiment, and the integrated chip does not include the optical transmitting component. If there is a relatively large difference between a spot size of the optical fiber and a spot size of the integrated chip, and/or there is a relatively large difference between the spot size of the integrated chip and a spot size of the optical transmitting component, an operating status of the optical transceiver sub-assembly is easily affected, and a relatively large loss is generated. To resolve this problem, in this embodiment of this application, the optical transceiver sub-assembly may further include a spot size converter. The following describes this implementation with reference to an embodiment and an accompanying drawing.

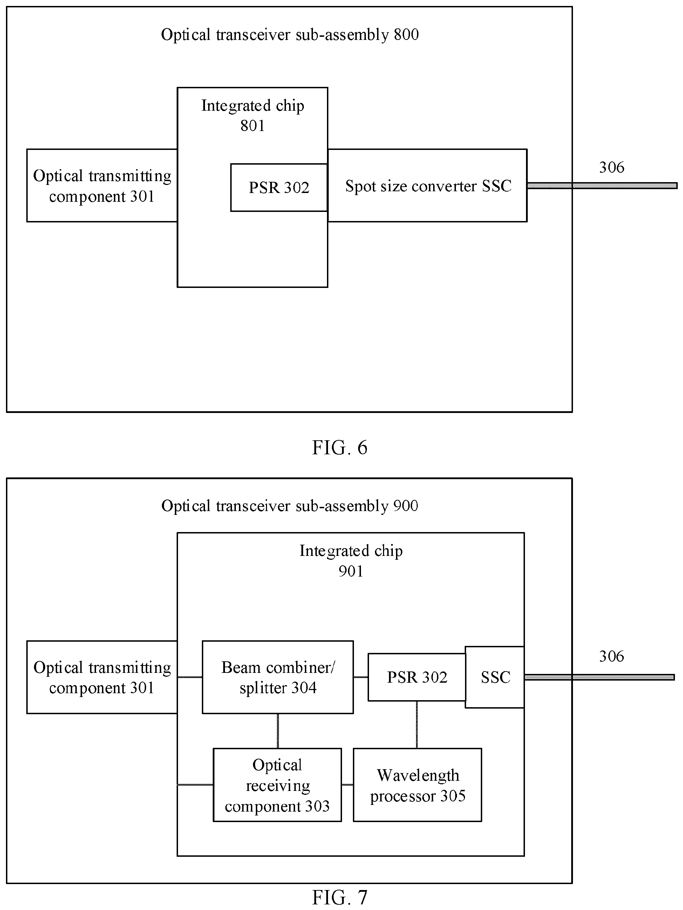

FIG. 6 is a schematic diagram of a structure of another optical transceiver sub-assembly 800 according to an embodiment of this application. As shown in FIG. 6, the optical transceiver sub-assembly 800 includes an optical transmitting component 301, an integrated chip 801, and a spot size converter (SSC). The SSC is located between a polarization splitter and rotator 302 of the integrated chip 801 and an optical fiber 306 mounted to the integrated chip 801. The SSC is configured to match a spot size of the integrated chip 801 with a spot size of the optical transmitting component 301, and is configured to match the spot size of the integrated chip 801 with a spot size of the optical fiber 306. A loss generated in an operating process of the optical transceiver sub-assembly 800 is reduced by matching the spot sizes.

In the sub-assembly structure illustrated in FIG. 6, the SSC is located outside the integrated chip 801. The SSC may be integrated with the integrated chip 801 in a mounting or hybrid integration manner. In addition, the SSC and a plurality of other elements (for example, a polarization splitter and rotator 302, a beam combiner/splitter 304, and a wavelength processor 305) may alternatively be formed into an integrated chip 901 through single tape-out, as shown in a schematic diagram of a structure of an optical transceiver sub-assembly 900 in FIG. 7. In FIG. 7, the SSC inside the integrated chip 901 also implements a function of matching spot sizes.

In practical application, an optical wave received by an optical receiving component in the optical transceiver sub-assembly is converted into an electrical signal, to implement optical-to-electrical conversion. The converted electrical signal may be further amplified by using a trans-impedance amplifier (TIA). The trans-impedance amplifier TIA is electrically connected to an electrical interface of the optical receiving component.

In practical application, the TIA may be disposed at a position close to the optical receiving component, to avoid an excessively long conductive line between the TIA and the optical receiving component, thereby improving integration of the optical transceiver sub-assembly. The TIA may be integrated into the integrated chip, or may be integrated with the integrated chip in a mounting or hybrid integration manner as a separate element.

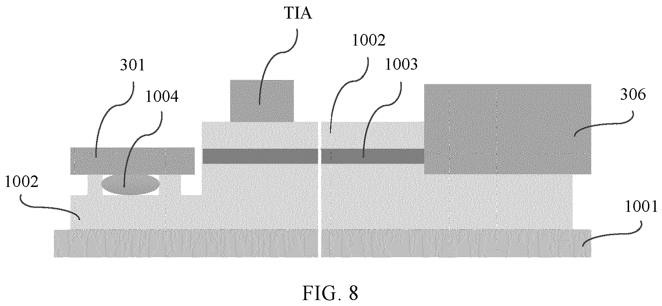

FIG. 8 is a diagram of a packaging structure of an optical transceiver sub-assembly 1000 according to an embodiment of this application. As shown in FIG. 8, the optical transceiver sub-assembly 1000 includes a printed circuit board 1001. An integrated silicon-on-insulator (SOI) chip 1002 is formed on the printed circuit board 1001. The chip 1002 includes a light-transmission silicon layer 1003. An optical transmitting component 301, an optical fiber 306, and a trans-impedance amplifier TIA are each integrated with the chip 1002 in a mounting or hybrid integration manner, to form the optical transceiver sub-assembly 1000 shown in FIG. 8. With reference to FIG. 8, it may be learned that an optical wave transmitted by the optical transmitting component 301 may be transmitted to the optical fiber 306 by using the light-transmission silicon layer 1003.

The chip 1002 is filled with solder 1004, and the optical transmitting component 301 may be integrated into the chip 1002 by using the solder 1004. The chip 1002 is obtained by performing single tape-out on an optical receiving component, a beam combiner/splitter, a wavelength processor, and a polarization splitter and rotator. It should be noted that, in practical application, the optical receiving component may alternatively be detached from the chip 1002, and externally integrated with the chip 1002 in the mounting or hybrid integration manner.

For the optical transceiver sub-assembly provided in the foregoing embodiments, if an optical communications device in which the optical transceiver sub-assembly is located further includes a module for transmitting a radio frequency signal, for example, a Wi-Fi module of an OLT or an ONT, to shield interference of the Wi-Fi module to the optical transceiver sub-assembly, based on the foregoing embodiments, a periphery of the optical transceiver sub-assembly may further include a shielding can. The shielding can surrounds the optical transmitting component, the polarization splitter and rotator, the optical receiving component, the beam combiner/splitter, and the wavelength processor, and the shielding can is mainly configured to shield a radio frequency signal outside the shielding can. In a possible implementation, one or more through holes may be disposed on the shielding can. The optical fiber may pass through the through hole, and a conductive line may also pass through the through hole.

Based on the optical transceiver sub-assembly provided in the foregoing embodiments, correspondingly, this application further provides a device including the transceiver sub-assembly. The following describes an implementation of the device with reference to an embodiment.

In this embodiment, a network device is provided with reference to an application scenario of an optical access network. For example, the network device may be an optical network terminal ONT and an optical line terminal OLT.

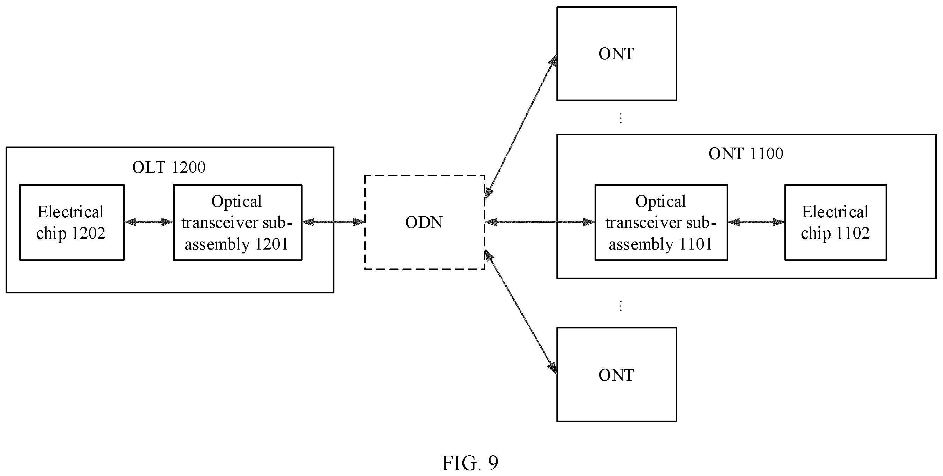

FIG. 9 is a diagram of an application scenario of an optical network terminal and an optical line terminal according to an embodiment. It may be learned from FIG. 9 that an ONT 1100 includes an optical transceiver sub-assembly 1101 and an electrical chip 1102, and an OLT 1200 includes an optical transceiver sub-assembly 1201 and an electrical chip 1202. The optical transceiver sub-assembly 1101 or the optical transceiver sub-assembly 1201 may be any optical transceiver sub-assembly in the foregoing optical transceiver sub-assembly embodiments, for example, the optical transceiver sub-assembly 300 shown in FIG. 3, the optical transceiver sub-assembly 700 shown in FIG. 5, or the optical transceiver sub-assembly 1000 shown in FIG. 8.

In the OLT or the ONT shown in FIG. 9, the optical transceiver sub-assembly is electrically connected to the electrical chip. A direction from each ONT to an ODN and from the ODN to the OLT is an uplink direction of optical signal transmission. A direction from the OLT to the ODN and from the ODN to each ONT is a downlink direction.

In the uplink direction, for the ONT 1100, the electrical chip 1102 is configured to provide a drive control signal for the optical transceiver sub-assembly 1101 based on to-be-uploaded data; and the optical transceiver sub-assembly 1101 is configured to generate an uplink optical signal based on the drive control signal, and transmit the uplink optical signal to the ODN by using an optical fiber. For the OLT 1200, the optical transceiver sub-assembly 1201 is configured to convert the uplink optical signal from the ODN into an electrical signal, and provide the electrical signal for the electrical chip 1202; and the electrical chip 1202 is configured to perform electrical processing on the electrical signal.

In the downlink direction, for the ONT 1100, the optical transceiver sub-assembly 1101 is configured to convert a downlink optical signal from the optical distribution network ODN into an electrical signal, and provide the electrical signal for the electrical chip 1102; and the electrical chip 1102 is configured to perform electrical processing on the electrical signal. For the OLT 1200, the electrical chip 1202 is configured to provide a drive control signal for the optical transceiver sub-assembly 1201 based on to-be-uploaded data; and the optical transceiver sub-assembly 1201 is configured to generate a downlink optical signal based on the drive control signal, and transmit the downlink optical signal to the ODN by using an optical fiber.

In this embodiment, the electrical chip included in the OLT 1200 and the ONT 1100 may include a driver, and the driver provides a drive signal for the optical transceiver sub-assembly. In addition, the electrical chip may further include a limiting amplifier (LA). The LA may be configured to amplify an electrical signal output by the optical transceiver sub-assembly. If an optical receiving component included in the optical transceiver sub-assembly directly outputs an electrical signal obtained after optical-to-electrical conversion to the limiting amplifier LA, the limiting amplifier LA is specifically configured to amplify the electrical signal. If the optical transceiver sub-assembly further includes a trans-impedance amplifier TIA, an input end of the LA in the electrical chip is electrically connected to an output end of the trans-impedance amplifier TIA of the optical transceiver sub-assembly, and the limiting amplifier LA is specifically configured to amplify an electrical signal output by the trans-impedance amplifier TIA.

In the application scenario of the optical access network, a quantity of ONTs is very large. Compared with a conventional BOSA, the optical transceiver sub-assembly provided in this embodiment of this application reduces material costs and process costs, and is very suitable for use as a single-fiber bi-directional transceiver sub-assembly of an ONT and an OLT, thereby reducing costs of a single device, and reducing costs of the ONT and the OLT that are deployed in the whole optical access network scenario.

With reference to an optical communication application scenario other than an optical access network, for example, a wireless fronthaul scenario or a campus interconnection scenario, an embodiment of this application further provides an optical communications device. The optical communications device includes an optical transceiver sub-assembly, and the optical transceiver sub-assembly may further include a driver and a limiting amplifier LA based on a structure of any optical transceiver sub-assembly provided in the foregoing embodiments.

If the optical transceiver sub-assembly does not include a trans-impedance amplifier TIA, an input end of the limiting amplifier LA is electrically connected to an electrical interface of an optical receiving component. If the optical transceiver sub-assembly includes a trans-impedance amplifier TIA, the input end of the limiting amplifier LA is electrically connected to an output end of the trans-impedance amplifier TIA. The driver is connected to an optical transmitting component, and is configured to provide a drive signal for the optical transmitting component, so that the optical transmitting component transmits an optical wave.

In the optical transceiver sub-assembly, the driver and the limiting amplifier LA may be separately formed into an integrated chip with another element through single tape-out, or may each be integrated with an integrated chip in the sub-assembly in a mounting or hybrid integration manner. Because the optical transceiver sub-assembly is integrated in a chip-based manner, elements such as the optical receiving component and the optical transmitting component do not need to be packaged into coaxial modules for assembling, thereby reducing material costs and process costs. Therefore, the optical communications device provided in this embodiment reduces production costs by using the optical transceiver sub-assembly.

Based on the optical transceiver sub-assembly and the related device product that are provided in the foregoing embodiments, correspondingly, this application further provides an optical transmitting and receiving method. The following provides a description with reference to an embodiment.

With reference to the foregoing description, the optical transceiver sub-assembly provided in the embodiments of this application may implement single-fiber bi-directional transmission of optical waves. Therefore, when the optical transmitting and receiving method provided in this embodiment is described, descriptions are separately provided from two different transmission directions of optical waves.

With reference to the structure of the optical transceiver sub-assembly 300 shown in FIG. 3, when the optical transceiver sub-assembly 300 is used as a whole as a receive end of an optical wave, a method for using the optical transceiver sub-assembly 300 includes:
when an optical wave is received by using an optical fiber, performing polarization processing and optical splitting on the optical wave, and then sequentially performing beam splitting, collection, and optical-to-electrical conversion. Specifically, the polarization splitter and rotator 302 included in the optical transceiver sub-assembly 300 performs polarization processing and optical splitting on an incident optical wave in a random polarization state, to obtain two beams of light through division, where one beam of light is split by the beam combiner/splitter 304 and then fed into the optical receiving component 303, and the other beam of light is split by the wavelength processor 305 and then fed into the optical receiving component 303. Finally, the optical receiving component 303 collects aggregated optical waves and implements optical-to-electrical conversion, and outputs a converted electrical signal.

When the optical transceiver sub-assembly 300 is used as a whole as a transmit end of an optical wave, the method for using the optical transceiver sub-assembly 300 includes:
when a driving electrical signal is received, generating optical waves based on the electrical signal, combining the generated optical waves, and sending a combined optical wave to the optical fiber. Specifically, the optical transmitting component 301 receives the driving electrical signal, and generates, based on drive control of the driving electrical signal, optical waves matching the driving electrical signal. The optical waves generated by the optical transmitting component 301 are combined by the beam combiner/splitter 304 included in the optical transceiver sub-assembly 300, and a combined optical wave is output by using the optical fiber 306.

In the foregoing method, the optical transceiver sub-assembly is used to separately receive and transmit optical waves by using the same optical fiber. In addition, each optical transceiver sub-assembly provided in the embodiments of this application does not need to be packaged after elements are packaged in a coaxial manner, and therefore only relatively low costs are required. Therefore, costs of using the transceiver sub-assembly are also relatively low.

Based on the optical transceiver sub-assembly, the optical network terminal, the optical line terminal, the optical communications device, and the optical transmitting and receiving method provided in the foregoing embodiments, this application further correspondingly provides a method for producing an optical transceiver sub-assembly that can isolate light. The following describes a specific implementation of the method with reference to an accompanying drawing and an embodiment.

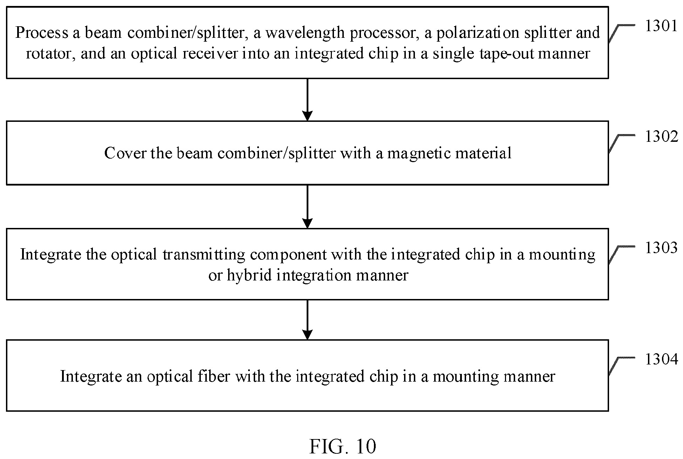

FIG. 10 is a flowchart of a method for producing an optical transceiver sub-assembly that can isolate light according to an embodiment of this application. As shown in FIG. 10, the production method includes:
Step 1301: Process a beam combiner/splitter, a wavelength processor, a polarization splitter and rotator, and an optical receiving component into an integrated chip in a single tape-out manner.
Step 1302: Cover the beam combiner/splitter with a magnetic material.

In this embodiment, the magnetic material covering the beam combiner/splitter is configured to make a forward transmission spectral line and a backward transmission spectral line of the beam combiner/splitter non-reciprocal, so that the beam combiner/splitter isolates, under an action of an applied magnetic field, an optical wave that is backward transmitted from the beam combiner/splitter to an optical transmitting component.

In this embodiment, a wavelength of an optical wave transmitted by the optical transmitting component is within a conduction wavelength range of the forward transmission spectral line and within a blocking wavelength range of the backward transmission spectral line. This may be understood with reference to the descriptions of the embodiments shown in FIG. 3 and FIG. 4, and details are not described herein.

Because material covering belongs to a relatively mature technical means, a specific implementation of this step is not limited herein. After being covered with the magnetic material, the beam combiner/splitter not only has a beam combining function and a beam splitting function, but also has functions of forward conduction and backward isolation.

Step 1303: Integrate the optical transmitting component with the integrated chip in a mounting or hybrid integration manner.

Hybrid integration may also be referred to as secondary integration. For a person skilled in the art, implementation of element mounting and hybrid integration belongs to a relatively mature technology. Therefore, details are not described herein.

Step 1304: Integrate an optical fiber with the integrated chip in a mounting manner.

One end of the optical fiber is configured to be integrated with the integrated chip through mounting, and the other end of the optical fiber is configured to be connected to another device or network.

When the optical transceiver sub-assembly operates, the end that is of the optical fiber and that is mounted to the integrated chip is optically connected to the polarization splitter and rotator. If the integrated chip formed in step 1301 further includes an SSC, the end that is of the optical fiber and that is mounted to the integrated chip is optically connected to the SSC.

Based on the description of the foregoing method, it may be learned that the optical transceiver sub-assembly produced by using the foregoing procedure does not need to be packaged after elements are separately packaged into coaxial modules, thereby avoiding many packaging operations, and reducing material costs and process costs. In addition, use of the magnetic material enables the beam combiner/splitter to have a function of isolating light, thereby preventing the optical wave that is backward transmitted from the beam combiner/splitter to the optical transmitting component from interfering with operating of the optical transmitting component.

It should be understood that in this application, "and/or" is used to describe an association relationship between associated objects, and indicates that there may be three relationships. For example, "A and/or B" may indicate that only A exists, only B exists, and both A and B exist, where A and B may be singular or plural. The character "/" generally represents an "or" relationship between the associated objects.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions recorded in the foregoing embodiments or make equivalent replacements to some technical features thereof.

## Claims

1. An optical transceiver sub-assembly (300), comprising: an optical transmitting component (301), a polarization splitter and rotator (302), an optical receiving component (303), an optical fiber (306) configured to transmit and receive a multi-wavelength signal, a beam combiner/splitter (304), and a wavelength processor (305) configured as a demultiplexer, wherein
the optical transmitting component (301) is optically connected to a first port (P1) of the beam combiner/splitter (304); a first optical interface (T1) and a second optical interface (T2) of the optical receiving component (303) are optically connected to a second port (P2) of the beam combiner/splitter (304) and a first port (K1) of the wavelength processor (305) respectively; and a third port (P3) of the beam combiner/splitter (304), the wavelength processor (305), and the optical fiber (306) are optically connected to the polarization splitter and rotator (302) separately,
wherein the polarization splitter and rotator (302), the beam combiner/splitter (304), and the wavelength processor (305) are formed into an integrated chip (901) through single-tape-out;
the optical transmitting component (301) is integrated into the integrated chip, or integrated with the integrated chip (901) in a mounting or hybrid integration manner;
the optical receiving component (303) is integrated into the integrated chip, or integrated with the integrated chip (901) in the mounting or hybrid integration manner: and
the optical fiber (306) is integrated with the integrated chip (901) in a mounting manner.

2. The optical transceiver sub-assembly (300) according to claim 1, where the beam combiner/splitter (304) is covered with a magnetic material, and the magnetic material is configured to isolate an optical wave that is backward transmitted from the beam combiner/splitter (304) to the optical transmitting component (301).

3. The optical transceiver sub-assembly (300) according to claim 2, where the magnetic material is specifically configured to isolate, under an action of an applied magnetic field, the optical wave that is backward transmitted from the beam combiner/splitter (304) to the optical transmitting component (301).

4. The optical transceiver sub-assembly (300) according to claim 1, further comprising: an on-chip isolator (701) that is located between the optical transmitting component (301) and the first port (P1) of the beam combiner/splitter (304), and that is configured to isolate an optical wave that is backward transmitted from the beam combiner/splitter (304) to the optical transmitting component (301).

5. The optical transceiver sub-assembly (300) according to any one of claims 1 to 4, further comprising a trans-impedance amplifier, wherein the trans-impedance amplifier is electrically connected to an electrical interface of the optical receiving component (303).

6. The optical transceiver sub-assembly (300) according to any one of claims 1 to 4, wherein the beam combiner/splitter (304) and the wavelength processor (305) are separately any one of the following: a Mach-Zehnder interferometer, a microring resonator, a directional coupler, or a Fabry-Perot cavity filter.

7. The optical transceiver sub-assembly (300) according to any one of claims 1 to 4, further comprising a spot size converter located between the polarization splitter and rotator (302) and the optical fiber (306), wherein specifically, the optical fiber (306) is optically connected to the polarization splitter and rotator (302) by using the spot size converter.

8. The optical transceiver sub-assembly (300) according to any one of claims 1 to 4, further comprising a shielding can that is located outside the optical transmitting component, the polarization splitter and rotator, the optical receiving component, the beam combiner/splitter, and the wavelength processor, and that is configured to shield a radio frequency signal outside the shielding can.

9. An optical network terminal (1100), comprising the optical transceiver sub-assembly (300, 1101) according to any one of claims 1 to 8, and further comprising an electrical chip (1102), wherein the optical transceiver sub-assembly (300, 1101) is electrically connected to the electrical chip (1102).

10. An optical line terminal (1200), comprising the optical transceiver sub-assembly (300, 1201) according to any one of claims 1 to 8, and further comprising an electrical chip (1202), wherein the optical transceiver sub-assembly (300, 1201) is electrically connected to the electrical chip (1202).

11. An optical communications device, comprising the optical transceiver sub-assembly (300) according to any one of claims 1 to 8, wherein the optical transceiver sub-assembly (300) further comprises a driver and a limiting amplifier.

## Patentansprüche

1. Optische Sender-Empfänger-Unteranordnung (300), umfassend:
eine optische Sendekomponente (301), einen Polarisationsteiler und -rotator (302), eine optische Empfangskomponente (303), eine optische Faser (306), die konfiguriert ist, um ein Mehrwellenlängensignal zu senden und zu empfangen, einen Strahlkombinierer/-teiler (304) und einen Wellenlängenprozessor (305), der als Demultiplexer konfiguriert ist, wobei
die optische Sendekomponente (301) optisch mit einem ersten Port (P1) des Strahlkombinierers/-teilers (304) verbunden ist; eine erste optische Schnittstelle (T1) und eine zweite optische Schnittstelle (T2) der optischen Empfangskomponente (303) optisch mit einem zweiten Port (P2) des Strahlkombinierers/- teilers (304) beziehungsweise einem ersten Port (K1) des Wellenlängenprozessors (305) verbunden sind; und ein dritter Port (P3) des Strahlkombinierers/-teilers (304), der Wellenlängenprozessor (305) und die optische Faser (306) jeweils optisch mit dem Polarisationsteiler und -rotator (302) verbunden sind,
wobei der Polarisationsteiler und -rotator (302), der Strahlkombinierer/-teiler (304) und der Wellenlängenprozessor (305) durch Single-Tape-Out zu einem integrierten Chip (901) ausgebildet sind;
die optische Sendekomponente (301) auf eine Montage- oder hybride Integrationsweise in den integrierten Chip integriert oder mit dem integrierten Chip (901) integriert ist;
die optische Empfangskomponente (303) auf die Montage- oder hybride Integrationsweise in den integrierten Chip integriert oder mit dem integrierten Chip (901) integriert ist; und
die optische Faser (306) auf eine Montageweise in den integrierten Chip (901) integriert ist.

2. Optische Sender-Empfänger-Unteranordnung (300) nach Anspruch 1, wobei der Strahlkombinierer/-teiler (304) mit einem magnetischen Material bedeckt ist und das magnetische Material konfiguriert ist, um eine optische Welle zu isolieren, die von dem Strahlkombinierer/-teiler (304) rückwärts zu der optischen Sendekomponente (301) gesendet wird.

3. Optische Sender-Empfänger-Unteranordnung (300) nach Anspruch 2, wobei das magnetische Material speziell konfiguriert ist, um unter einer Einwirkung eines angelegten magnetischen Felds die optische Welle zu isolieren, die von dem Strahlkombinierer/- teiler (304) rückwärts zu der optischen Sendekomponente (301) gesendet wird.

4. Optische Sender-Empfänger-Unteranordnung (300) nach Anspruch 1, ferner umfassend: einen On-Chip-Isolator (701), der sich zwischen der optischen Sendekomponente (301) und dem ersten Port (P1) des Strahlkombinierers/-teilers (304) befindet und der konfiguriert ist, um eine optische Welle zu isolieren, die von dem Strahlkombinierer/-teiler (304) rückwärts zu der optischen Sendekomponente (301) gesendet wird.

5. Optische Sender-Empfänger-Unteranordnung (300) nach einem der Ansprüche 1 bis 4, ferner umfassend einen Transimpedanzverstärker, wobei der Transimpedanzverstärker elektrisch mit einer elektrischen Schnittstelle der optischen Empfangskomponente (303) verbunden ist.

6. Optische Sender-Empfänger-Unteranordnung (300) nach einem der Ansprüche 1 bis 4, wobei der Strahlkombinierer/-teiler (304) und der Wellenlängenprozessor (305) jeweils eines des Folgenden sind: ein Mach-Zehnder-Interferometer, ein Mikroringresonator, ein Richtkoppler oder ein Fabry-Perot-Hohlraumfilter.

7. Optische Sender-Empfänger-Unteranordnung (300) nach einem der Ansprüche 1 bis 4, ferner umfassend einen Spotgrößenkonverter, der sich zwischen dem Polarisationsteiler und -rotator (302) und der optischen Faser (306) befindet, wobei speziell die optische Faser (306) mithilfe des Spotgrößenkonverters optisch mit dem Polarisationsteiler und -rotator (302) verbunden ist.

8. Optische Sender-Empfänger-Unteranordnung (300) nach einem der Ansprüche 1 bis 4, ferner umfassend ein Abschirmgehäuse, das sich außerhalb der optischen Sendekomponente, des Polarisationsteilers und -rotators, der optischen Empfangskomponente, des Strahlkombinierers/-teilers und des Wellenlängenprozessors befindet und das konfiguriert ist, um ein Hochfrequenzsignal außerhalb des Abschirmgehäuses abzuschirmen.

9. Optisches Netzwerkendgerät (1100), umfassend die optische Sender-Empfänger-Unteranordnung (300, 1101) nach einem der Ansprüche 1 bis 8 und ferner umfassend einen elektrischen Chip (1102), wobei die optische Sender-Empfänger-Unteranordnung (300, 1101) elektrisch mit dem elektrischen Chip (1102) verbunden ist.

10. Optisches Leitungsendgerät (1200), umfassend die optische Sender-Empfänger-Unteranordnung (300, 1201) nach einem der Ansprüche 1 bis 8 und ferner umfassend einen elektrischen Chip (1202), wobei die optische Sender-Empfänger-Unteranordnung (300, 1201) elektrisch mit dem elektrischen Chip (1202) verbunden ist.

11. Optische Kommunikationsvorrichtung, umfassend die optische Sender-Empfänger-Unteranordnung (300) nach einem der Ansprüche 1 bis 8, wobei die optische Sender-Empfänger-Unteranordnung (300) ferner einen Treiber und einen Begrenzungsverstärker umfasst.

## Revendications

1. Sous-ensemble émetteur-récepteur optique (300), comprenant :
un composant de transmission optique (301), un séparateur et rotateur de polarisation (302), un composant de réception optique (303), une fibre optique (306) configurée pour transmettre et recevoir un signal multi-longueurs d'onde, un combineur/séparateur de faisceau (304) et un processeur de longueur d'onde (305) configuré comme un démultiplexeur, dans lequel
le composant de transmission optique (301) est connecté optiquement à un premier port (P1) du combineur/séparateur de faisceau (304) ; une première interface optique (T1) et une seconde interface optique (T2) du composant de réception optique (303) sont connectées optiquement respectivement à un deuxième port (P2) du combineur/séparateur de faisceau (304) et à un premier port (K1) du processeur de longueur d'onde (305) ; et un troisième port (P3) du combineur/séparateur de faisceau (304), le processeur de longueur d'onde (305) et la fibre optique (306) sont connectés optiquement séparément au séparateur et rotateur de polarisation (302),
dans lequel le séparateur et rotateur de polarisation (302), le combinateur/séparateur de faisceau (304) et le processeur de longueur d'onde (305) sont formés dans une puce intégrée (901) par une seule étape de fabrication ;
le composant de transmission optique (301) est intégré dans la puce intégrée, ou intégré avec la puce intégrée (901) d'une manière montée ou par intégration hybride ;
le composant de réception optique (303) est intégré dans la puce intégrée, ou intégré avec la puce intégrée (901) de manière montée ou par intégration hybride ; et
la fibre optique (306) est intégrée avec la puce intégrée (901) de manière montée.

2. Sous-ensemble émetteur-récepteur optique (300) selon la revendication 1, dans lequel le combineur/séparateur de faisceau (304) est recouvert d'un matériau magnétique, et le matériau magnétique est configuré pour isoler une onde optique qui est transmise en arrière du combineur/séparateur de faisceau (304) au composant de transmission optique (301).

3. Sous-ensemble émetteur-récepteur optique (300) selon la revendication 2, dans lequel le matériau magnétique est spécifiquement configuré pour isoler, sous l'action d'un champ magnétique appliqué, l'onde optique qui est transmise en arrière du combinateur/séparateur de faisceau (304) au composant de transmission optique (301).

4. Sous-ensemble émetteur-récepteur optique (300) selon la revendication 1, comprenant également : un isolateur sur puce (701) situé entre le composant de transmission optique (301) et le premier port (P1) du combineur/séparateur de faisceau (304), et configuré pour isoler une onde optique transmise en arrière du combineur/séparateur de faisceau (304) au composant de transmission optique (301).

5. Sous-ensemble émetteur-récepteur optique (300) selon l'une quelconque des revendications 1 à 4, comprenant également un amplificateur de transimpédance, dans lequel l'amplificateur de transimpédance est connecté électriquement à une interface électrique du composant de réception optique (303).

6. Sous-ensemble émetteur-récepteur optique (300) selon l'une quelconque des revendications 1 à 4, dans lequel le combineur/séparateur de faisceau (304) et le processeur de longueur d'onde (305) sont séparément l'un quelconque des éléments suivants : un interféromètre de Mach-Zehnder, un résonateur à microanneau, un coupleur directionnel ou un filtre à cavité Fabry-Perot.

7. Sous-ensemble émetteur-récepteur optique (300) selon l'une quelconque des revendications 1 à 4, comprenant également un convertisseur de taille de point situé entre le séparateur et rotateur de polarisation (302) et la fibre optique (306), dans lequel plus précisément, la fibre optique (306) est connectée optiquement au séparateur et rotateur de polarisation (302) à l'aide du convertisseur de taille de point.

8. Sous-ensemble émetteur-récepteur optique (300) selon l'une quelconque des revendications 1 à 4, comprenant également un boîtier de blindage situé à l'extérieur du composant de transmission optique, du séparateur et rotateur de polarisation, du composant de réception optique, du combineur/séparateur de faisceau et du processeur de longueur d'onde, et configuré pour blinder un signal radiofréquence à l'extérieur du boîtier de blindage.

9. Terminal de réseau optique (1100), comprenant le sous-ensemble émetteur-récepteur optique (300, 1101) selon l'une quelconque des revendications 1 à 8, et comprenant également une puce électrique (1102), dans lequel le sous-ensemble émetteur-récepteur optique (300, 1101) est connecté électriquement à la puce électrique (1102).

10. Terminal de ligne optique (1200), comprenant le sous-ensemble émetteur-récepteur optique (300, 1201) selon l'une quelconque des revendications 1 à 8, et comprenant également une puce électrique (1202), dans lequel le sous-ensemble émetteur-récepteur optique (300, 1201) est connecté électriquement à la puce électrique (1202).

11. Dispositif de communication optique, comprenant le sous-ensemble émetteur-récepteur optique (300) selon l'une quelconque des revendications 1 à 8, dans lequel le sous-ensemble émetteur-récepteur optique (300) comprend également un pilote et un amplificateur limiteur.
